# EUROPEAN PATENT SPECIFICATION

(11) **EP 4 076 094 B1**
(45) Date of publication and mention of the grant of the patent: **27.08.2025**
(21) Application number: 20820876.9
(22) Date of filing: 07.12.2020
(51) Int. Cl.: A47D 9/00, A47D 13/02

(54) **FOLDABLE CHILD CARRIER**
FALTBARER KINDERWAGEN
PORTE-BÉBÉ PLIANT

(30) Priority: 18.12.2019 CN 201911310604
(43) Date of publication of application: 26.10.2022
(60) Divisional application: 25189979.5
(73) Proprietor: Wonderland Switzerland AG, 6312 Steinhausen (CH)
(72) Inventor: YUAN, Jialiang, Dongguan, Guangdong 523648 (CN)
(74) Representative: Lucke, Andreas
(86) International application number: PCT/EP2020/084825
(87) International publication number: WO 2021/122088

(56) References cited:
- CN-U- 209 202 565
- CN-U- 209 712 304
- CN-Y- 2 877 469
- US-A1- 2019 335 917

## Description

### Field of the Invention

The present invention relates to a foldable child carrier according claim 1.

### Background of the Invention

With advancement of society, development of economy and improvement of technology, there are various consumer products in the market for improving material living conditions to promote qualities of people's lives. Child carriers are one of the various consumer products. Parents, who have children, may use different child carriers, such as child bassinets, child baskets, child cradles, child strollers, to carry their children instead of holding the children with their hands according to different demands for reducing burdens when going out.

Currently, in order to ensure safety of use of child carriers, most child carriers, especially child bassinets or child baskets, have fixed supporting structures which cannot be detached or folded. However, such child carriers are too bulky to transport and store. The child carriers not only need to meet requirements of comfort and safety, but also need to achieve purposes of easy transportation and storage. Therefore, there is a need to provide an improved foldable child carrier for solving the aforementioned problems.

CN 209202565 U describes a folding sleeping basket with a locking mechanism.

### Summary of the Invention

This is mind, the present invention aims at providing a foldable child carrier.

This is achieved by a foldable child carrier according to claim 1. The dependent claims pertain to corresponding further developments and improvements.

As will be seen more clearly from the detail description following below, the claimed foldable child carrier includes a lateral support, an upper frame, a lower plate and a folding mechanism. The lateral support is connected to and located between the lower plate and the upper frame. The lateral support includes a first supporting component and a second supporting component movably connected to the first supporting component. The lateral support is folded or unfolded by a relative movement of the first supporting component and the second supporting component. The folding mechanism includes a driven component, a locking component and an operating component. The locking component is configured to engage with or disengage from the driven component. The operating component is linked to the driven component. The operating component drives the driven component to engage with the locking component for allowing the relative movement of the first supporting component and the second supporting component or drives the driven component to disengage from the locking component for restraining the relative movement of the first supporting component and the second supporting component.

According to the present invention, the driven component and the operating component are movably installed on a connection of the first supporting component and the second supporting component, and the locking component is fixed on the connection of the first supporting component and the second supporting component.

According to an embodiment of the present invention, the driven component and the operating component are movably installed on one of the first supporting component and the second supporting component. The locking component is fixed on another one of the first supporting component and the second supporting component. An end of the driven component is fixedly connected to the operating component, and another end of the driven component is for detachably engaging with the locking component.

According to an embodiment of the present invention, the operating component and the driven component move along a longitudinal direction of the one of the first supporting component and the second supporting component.

According to an embodiment of the present invention, the driven component is a plate-shaped structure.

According to an embodiment of the present invention, the driven component includes a fixing portion and a restraining portion. The fixing portion and the restraining portion are arranged along a longitudinal direction of the driven component and located at two opposite ends of the driven component. The fixing portion is fixedly connected to the operating component, and the restraining portion is for detachably engaging with the locking component.

According to an embodiment of the present invention, the fixing portion is at least one connecting hole on an upper end of the driven component, and the restraining portion is at least one inserting block on a lower end of the driven component.

According to an embodiment of the present invention, the operating component is a plug-shaped structure.

According to an embodiment of the present invention, the operating component includes an inserting portion and operating portion. The inserting portion and the operating portion are arranged along a traverse direction of the operating component and located at two opposite sides of the operating component. The inserting portion passes through the driven component and slidably engages with an inserting hole on the first supporting component, and the operating portion slidably abuts against an outer wall of the first supporting component and protrudes from the outer wall of the first supporting component.

According to an embodiment of the present invention, the operating portion is a pushing block slidably disposed on the outer wall of the first supporting component, and the inserting portion is at least one inserting column protruding away from the pushing block from a side of the pushing block attached on the first supporting component.

According to an embodiment of the present invention, the inserting hole is a long hole penetrating through two opposite lateral walls of the first supporting component.

According to an embodiment of the present invention, the folding mechanism further includes a resilient component connected to and located between the operating component and the one of the first supporting component and the second supporting component or connected to and located between the driven component and the one of the first supporting component and the second supporting component for driving the driven component to move toward the locking component to engage with the locking component.

According to an embodiment of the present invention, the locking component is a restraining slot.

According to an embodiment of the present invention, an opening of the restraining slot includes an arc-shaped guiding surface.

According to an embodiment of the present invention, the first supporting component is rotatably or slidably connected to the second supporting component.

According to an embodiment of the present invention, the first supporting component includes an accommodating chamber. The accommodating chamber is arranged along a longitudinal direction of the first supporting component. The driven component is inserted into the accommodating chamber in a loose-fitting manner. A portion of the operating component extends along a traverse direction of the first supporting component from a side of the first supporting component and passes through the driven component to slidably engage with an inserting hole on another side of the first supporting component, and the locking component is disposed on a top end of the second supporting component and for detachably engaging with the driven component.

According to the present invention, the first supporting component includes a first connecting portion and a first pivoting portion. The second supporting component includes a second connecting portion and a second pivoting portion. The first connecting portion is rotatably connected to the upper frame. The first pivoting portion is pivotally connected to the second pivoting portion by a first pivoting shaft, and the second connecting portion is rotatably connected to the lower plate.

According to an embodiment of the present invention, the first supporting component includes an accommodating chamber. The accommodating chamber is arranged along a longitudinal direction of the first supporting component and located between the first connecting portion and the first pivoting portion. The driven component is inserted into the accommodating chamber in a loose-fitting manner, and a portion of the operating component extends along a traverse direction of the first supporting component from a side of the first supporting component and passes through the driven component to slidably engage with an inserting hole on another side of the first supporting component.

According to an embodiment of the present invention, the lateral support further includes a first connecting component and a second connecting component. An end of the first connecting component is rotatably sleeved on the upper frame. Another end of the first connecting component is fixedly connected to the first connecting portion. An end of the second connecting component is fixedly connected to the lower plate, and another end of the second connecting component is pivotally connected to the second connecting portion by a second pivoting shaft.

In summary, in the present invention, the operating component can drive the driven component to disengage from the locking component for allowing the relative movement of the first supporting component and the second supporting component or drive the driven component to engage with the locking component for restraining the relative movement of the first supporting component and the second supporting component. Therefore, the lateral support can be folded by the relative movement of the first supporting component and the second supporting component to fold the entire child carrier to reduce an occupied space of the entire foldable child carrier for easy transportation and storage when the operating component is operated to drive the driven component to disengage from the locking component. Furthermore, the relative movement of the first supporting component and the second supporting component can be restrained by engagement of the driven component and the locking component to prevent an accidental folding movement of the foldable child carrier, which improves safety in use. Besides, the present invention has simple structure and easy operation.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof
FIG. 1 is a schematic diagram of a foldable child carrier in an unfolded state according to an embodiment of the present invention,
FIG. 2 is a schematic diagram of the foldable child carrier in a folded state according to the embodiment of the present invention,
FIG. 3 is a schematic diagram of the foldable child carrier in the unfolded state at another view according to the embodiment of the present invention,
FIG. 4 is a schematic diagram of the foldable child carrier in a state between the folded state and the unfolded state according to the embodiment of the present invention,
FIG. 5 is a partial exploded diagram of the foldable child carrier according to the embodiment of the present invention,
FIG. 6 is an enlarged diagram of an A portion of the foldable child carrier shown in FIG. 5 according to the embodiment of the present invention, and
FIG. 7 is a partial sectional diagram of the foldable child carrier according to the embodiment of the present invention.

### Detailed Description

In order to illustrate technical specifications and structural features as well as achieved purposes and effects of the present invention, relevant embodiments and figures are described as follows.

In the following detailed description of the preferred embodiments, reference is made to the accompanying drawings which form a part hereof, and in which is shown by way of illustration specific embodiments in which the invention may be practiced. In this regard, directional terminology, such as "top", "bottom", "front", "back", etc., is used with reference to the orientation of the Figure(s) being described. The components of the present invention can be positioned in a number of different orientations. As such, the directional terminology is used for purposes of illustration and is in no way limiting. Accordingly, the drawings and descriptions will be regarded as illustrative in nature and not as restrictive. Also, the term "connect" or "link" is intended to mean either an indirect or direct mechanical connection. Thus, if a first device is connected or linked to a second device, that connection may be through a direct mechanical connection, or through an indirect mechanical connection via other devices and connections.

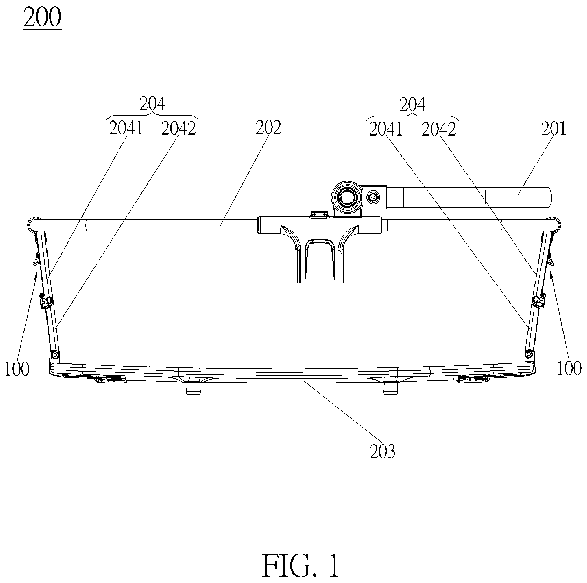

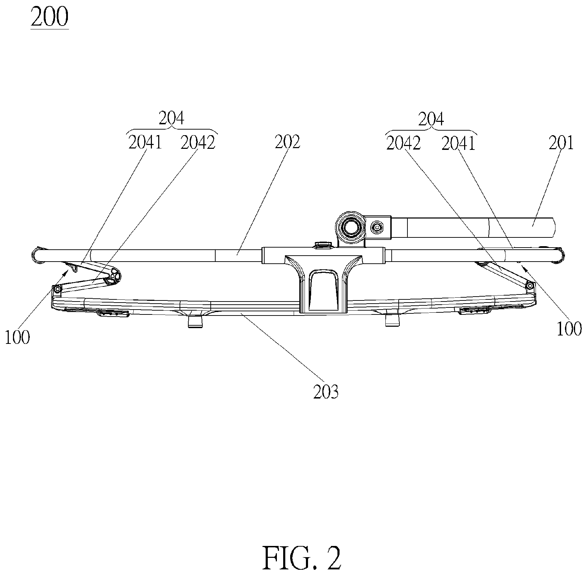

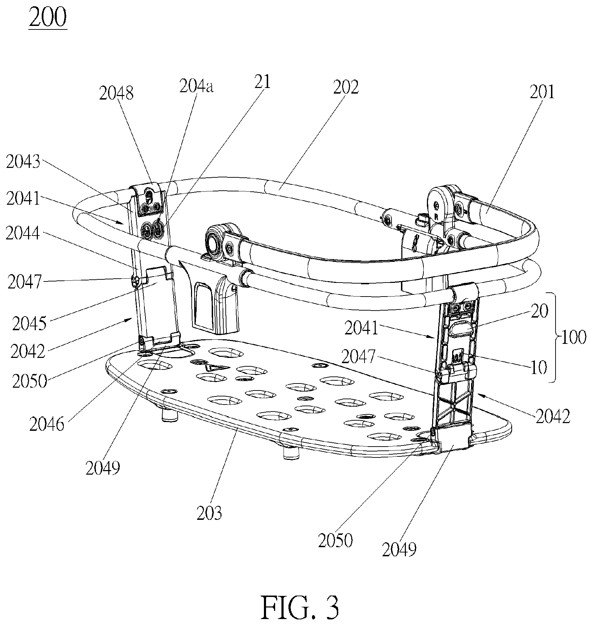

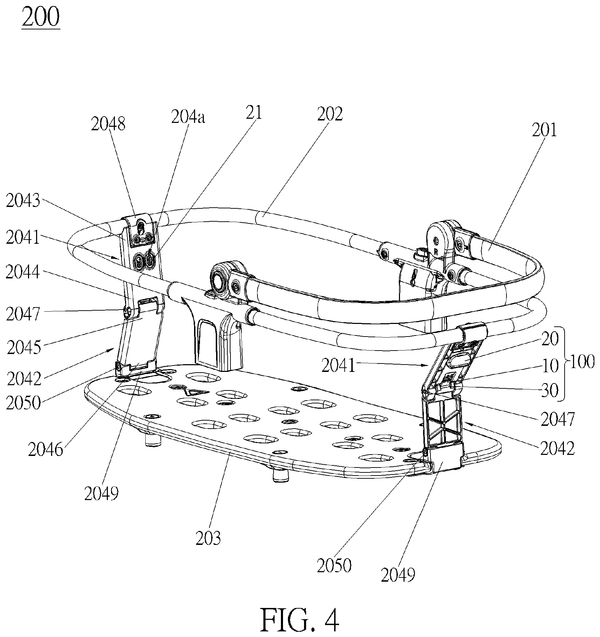

Please refer to FIG. 1 to FIG. 4. FIG. 1 is a schematic diagram of a foldable child carrier 200 in an unfolded state according to an embodiment of the present invention. FIG. 2 is a schematic diagram of the foldable child carrier 200 in a folded state according to the embodiment of the present invention. FIG. 3 is a schematic diagram of the foldable child carrier 200 in the unfolded state at another view according to the embodiment of the present invention. FIG. 4 is a schematic diagram of the foldable child carrier 200 in a state between the folded state and the unfolded state according to the embodiment of the present invention. As shown in FIG. 1 to FIG. 2, in this embodiment, the foldable child carrier 200 can be a child bassinet. However, the present invention is not limited to this embodiment. For example, in another embodiment, the foldable child carrier can be a child basket, a child cradle, a child crib or a child stroller. The foldable child carrier 20 includes a handle 201, an upper frame 202, a lower plate 203, two lateral supports 204 and two folding mechanisms 100. The handle 201 is pivotally connected to the upper frame 202. The two lateral supports 204 are located between and connected to the upper frame 201 and the lower plate 203. Each of the two folding mechanisms 100 is disposed on the corresponding lateral support 204 for allowing a folding operation of the corresponding lateral support 204 to switch the foldable child carrier 200 from the unfolded state to the folded state, i.e., to reduce a height of the foldable child carrier 200 for easy transportation and storage.

However, the present invention is not limited to this embodiment. In another embodiment, the folding mechanism can be disposed on the lower plate or the upper frame to reduce a length or a width of the lower plate or a length or a width of the upper frame, so as to reduce a length or a width of the entire foldable child carrier for easy transportation and storage.

Specifically, the upper frame 202 is located above the lower plate 203, and the upper frame 202 and the lower plate 203 are arranged in parallel and spaced from each other. The two lateral supports 204 connect two opposite sides of the upper frame 202 to two opposite sides of the lower plate 203, respectively, so as to enclose a supporting space for accommodating a child by the upper frame 202, the lower plate 203 and the two lateral supports 204. In another embodiment, the foldable child carrier can further include at least one clothing component or at least one cushion on at least one of the upper frame, the lower plate and the two lateral supports for improving the child's comfort. The two folding mechanisms 100 are disposed on the two lateral supports 204 respectively and symmetrical to each other, so as to fold or unfold the two lateral supports 204 synchronously to stably fold or unfold the entire foldable child carrier 200. Since the foldable child carrier 200 has symmetrical structure at two sides, detailed description for structure of the foldable child carrier 200 at one side is provided as follows for simplicity.

As shown in FIG. 1 to FIG. 4, the lateral support 204 includes a first supporting component 2041 and a second supporting component 2042 movably connected to the first supporting component 2041. In this embodiment, the first supporting component 2041 and the second supporting component 2042 can be rotatably connected to each other, and the lateral support 204 can be folded or unfolded by a relative rotating movement of the first supporting component 2041 and the second supporting component 2042. However, the present invention is not limited to this embodiment. For example, in another embodiment, the first supporting component and the second supporting component can be slidably connected to each other, and the lateral support can be folded or unfolded by a relative sliding movement of the first supporting component and the second supporting component.

Furthermore, the folding mechanism 100 includes a driven component 10, an operating component 20 and a locking component 30 which are disposed on a connection of the first supporting component 2041 and the second supporting component 2042. The driven component 10 is linked to the operating component 20 and can be driven to move by the operating component 20. The driven component 10 is configured to detachably engage with the locking component 30. The operating component 20 can drive the driven component 10 to engage with or disengage from the locking component 30 when the operating component 20 is operated. The driven component 10 engages with the locking component 30 to restrain the relative movement of the first supporting component 2041 and the second supporting component 2042. The driven component 10 disengages from the locking component 30 to allow the relative movement of the first supporting component 2041 and the second supporting component 2042.

In this embodiment, the first supporting component 2041 and the second supporting component 2042 can be two plate-shaped structures pivotally connected to each other, and an occupied space of the lateral support 204 can be changed by the relative rotating movement of the first supporting component 2041 and the second supporting component 2042. However, the present invention is not limited to this embodiment. For example, in another embodiment, the first supporting component and the second supporting component can be two cylindrical structures slidably sleeved with each other, and the lateral support can be folded or unfolded by a relative sliding movement of the first supporting component and the second supporting component.

Specifically, in this embodiment, the first supporting component 2041 includes a first connecting portion 2043 and a first pivoting portion 2044. The second supporting component 2042 includes a second connecting portion 2045 and a second pivoting portion 2046. The first connecting portion 2043 is rotatably connected to the upper frame 202. The first pivoting portion 2044 and the second pivoting portion 2046 are pivotally connected to each other by a first pivoting shaft 2047. The second connecting portion 2045 is rotatably connected to the lower plate 203.

More specifically, the first supporting component 2041 includes an accommodating chamber 204b arranged along a longitudinal direction of the first supporting component 2041 and located between the first connecting portion 2043 and the first pivoting portion 2044. The driven component 10 is inserted into the accommodating chamber 204b in a loose-fitting manner. A portion of the operating component 20 extends along a traverse direction of the first supporting component 2041 from a side of the first supporting component 2041 and passes through the driven component 10 to slidably engage with an inserting hole 204a on another side of the first supporting component 2041. The locking component 30 is disposed on a top end of the second supporting component 2042 and for detachably engaging with the driven component 10.

In order to connect the lateral support 204 to the upper frame 202 and the lower plate 203, the lateral support 204 further includes a first connecting component 2048 and a second connecting component 2049. An end of the first connecting component 2048 is rotatably sleeved on the upper frame 202. Another end of the first connecting component 2048 is fixedly connected to the first connecting portion 2043. An end of the second connecting component 2049 is fixedly connected to the lower plate 203. Another end of the second connecting component 2049 is pivotally connected to the second connecting portion 2045 by a second pivoting shaft 2050.

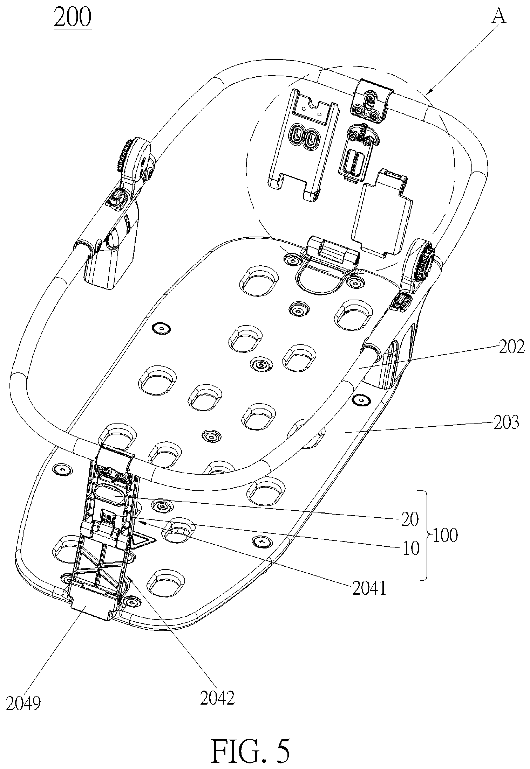

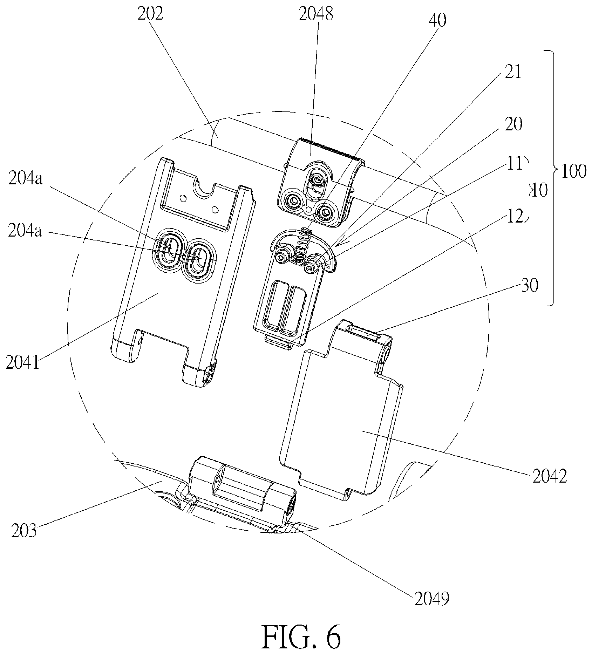

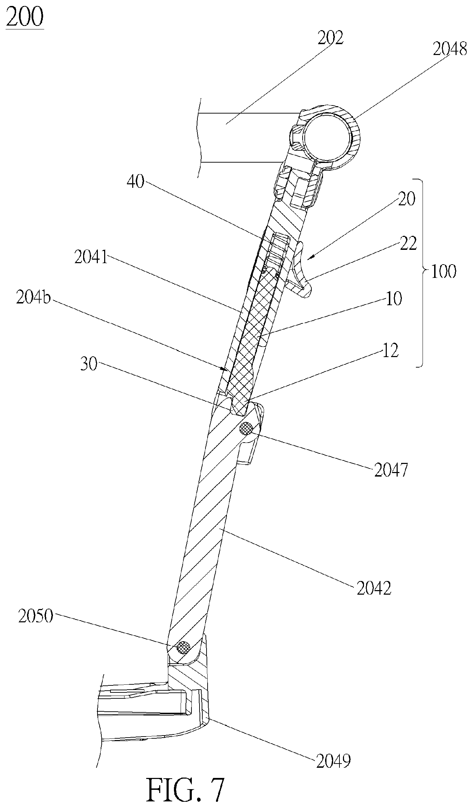

Please refer to FIG. 5 to FIG. 7. FIG. 5 is a partial exploded diagram of the foldable child carrier 200 according to the embodiment of the present invention. FIG. 6 is an enlarged diagram of an A portion of the foldable child carrier 200 shown in FIG. 5 according to the embodiment of the present invention. FIG. 7 is a partial sectional diagram of the foldable child carrier 200 according to the embodiment of the present invention. As shown in FIG. 5 to FIG. 7, in this embodiment, the driven component 10 and the operation 20 can be movably installed on the connection of the first supporting component 2041 and the second supporting component 2042. The locking component 30 is fixed on the connection of the first supporting component 2041 and the second supporting component 2042.

Specifically, the driven component 10 and the operating component 20 are slidably installed on the first supporting component 2041 along the longitudinal direction of the first supporting component 2041. The locking component 30 is fixed on the second supporting component 2042. An end of the driven component 10 is fixedly connected to the operating component 20. Another end of the driven component 10 is for detachably engaging with the locking component 30.

However, the present invention is not limited to this embodiment. For example, in another embodiment, the driven component and the operating component can be slidably installed on the second supporting component along the longitudinal direction of the second supporting component, and the locking component is fixed on the first supporting component. Alternatively, in another embodiment, the driven component and the operating component can be installed on one of the first supporting component and the second supporting component in any other movable manner, e.g., in a rotatable manner, and the locking component is fixed on another one of the first supporting component and the second supporting component.

More specifically, the driven component 10 can be a plate-shaped structure. The operating component 20 can be a plug-shaped structure. The locking component 30 can be a restraining slot. Furthermore, an opening structure of the restraining slot can includes an arc-shaped guiding surface, and an engaging end of the driven component 10 for detachably engaging with the locking component 30 can includes another arc-shaped guiding surface. The two arc-shaped guiding surfaces can cooperate with each other to drive the driven component 10 to move away from the locking component 30 to prevent any interference caused by the driven component 10 during an unfolding operation of the foldable child carrier 200.

Besides, the driven component 10 includes a fixing portion 11 and a restraining portion 12 arranged along a longitudinal direction of the driven component 10 and located at two opposite ends of the driven component 10. The fixing portion 11 is fixedly connected to the operating component 20. The restraining portion 12 is for detachably engaging with the locking component 30 located at the top end of the second supporting component 2042. The fixing portion 11 can be at least one connecting hole on an upper end of the driven component 10. The restraining portion 12 can be at least one inserting block on a lower end of the driven component 10. A shape of the restraining portion 12 can match with a shape of the locking component 30. When the restraining portion 12 is inserted into the locking component 30, the first supporting component 2041 and the second supporting component 2042 are positioned to form a straight structure cooperatively to provide support for the upper frame 202 and the lower plate 203. When the restraining portion 12 is disengaged from the locking component 30, the first supporting component 2041 is allowed to rotate or pivot relative to the second supporting component 2042 around the first pivoting shaft 2047 to fold the foldable child carrier 200.

Moreover, the operating component 20 includes an inserting portion 21 and an operating portion 22 arranged along a traverse direction of the operating component 20 and located at two opposite sides of the operating component 20. The inserting portion 21 passes through the fixing portion 11 and slidably engages with the inserting hole 204a on the first supporting component 2041. The operating portion 22 slidably abuts against an outer wall of the first supporting component 2041 and protrudes from the outer wall of the first supporting component 2041. The operating portion 22 can be a pushing block slidably disposed on the outer wall of the first supporting component 2041. The inserting portion 21 can be at least one inserting column protruding away from the pushing block from a side of the pushing block attached on the first supporting component 2041. The at least one inserting column cooperates with the inserting hole 204a. The inserting hole 204a can be a long hole penetrating through two opposite lateral walls of the first supporting component 2041. An upper wall and a lower wall of the inserting hole 204a can stop a sliding movement of the inserting portion 21.

Additionally, the folding mechanism 100 further includes a resilient component 40. The resilient component 40 is connected to and located between the first supporting component 2041 and the driven component 10 for driving the driven component 10 to engage with the locking component 30. The resilient component 40 can be a compression spring. However, the present invention is not limited to this embodiment. For example, the resilient component can be connected to and located between the operating component and one of the first supporting component and the second supporting component where the driven component and the operating component are installed, so as to drive the operating component to drive the driven component to engage with the locking component.

When it is desired to fold the foldable child carrier 200, the operating component 20 can be pushed upwardly to drive the driven component 10 to slide upwardly for disengaging from the locking component 30 and to compress the resilient component 40, so that the first supporting component 2041 is allowed to rotate or pivot relative to the second supporting component 2042 to fold the foldable child carrier 200. When it is desired to unfold the foldable child carrier 20, the operating component 20 can be pushed upwardly to drive the driven component 10 to slide upwardly for preventing any interference caused by the driven component 10, and then the first supporting component 2041 can be rotated or pivoted relative to the second supporting component 2042 to unfold the foldable child carrier 200. When the foldable child carrier 200 is completely unfolded, the operating component 20 can be released to allow the resilient component 40 to drive the driven component 10 to slide downwardly to engage with the locking component 30 for positioning the foldable child carrier 200 in the unfolded state.

It should be noticed that in this embodiment, the driven component 10 and the locking component 30 includes the corresponding arc-shaped guiding surfaces, respectively. Therefore, the driven component 10 can be driven to move away from the locking component 20 and to compress the resilient component 40 by a cooperation of the corresponding arc-shaped guiding surfaces for preventing any interference during the unfolding operation of the foldable child carrier 200. Afterwards, the resilient component 40 can drive the driven component 10 to engage with the locking component 30 for positioning the foldable child carrier 200 in the unfolded state once the driven component 10 is aligned with the locking component 30. In other words, operation of the operating component 20 is not necessary during the unfolding operation of the foldable child carrier 200. Therefore, the present invention is convenient in use.

In contrast to the prior art, in the present invention, the operating component can drive the driven component to disengage from the locking component for allowing the relative movement of the first supporting component and the second supporting component or drive the driven component to engage with the locking component for restraining the relative movement of the first supporting component and the second supporting component. Therefore, the lateral support can be folded by the relative movement of the first supporting component and the second supporting component to fold the entire foldable child carrier to reduce an occupied space of the entire foldable child carrier for easy transportation and storage when the driven component is driven to disengage from the locking component. Furthermore, the relative movement of the first supporting component and the second supporting component can be restrained by engagement of the driven component and the locking component to prevent an accidental folding movement of the foldable child carrier, which improves safety in use. Besides, the present invention has simple structure and easy operation.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A foldable child carrier (200) comprises a lateral support (204), an upper frame (202), a lower plate (203) and a folding mechanism (100), the lateral support (204) being connected to and located between the lower plate (203) and the upper frame (202), the lateral support (204) comprising a first supporting component (2041) and a second supporting component (2042) movably connected to the first supporting component (2041), wherein the first supporting component (2041) comprises a first connecting portion (2043) and a first pivoting portion (2044), wherein the first connecting portion (2043) is rotatably connected to the upper frame (202) and the second supporting component (2042) comprises a second connecting portion (2045) and a second pivoting portion (2046), wherein the second connecting portion (2045) is rotatably connected to the lower plate (203), and wherein the first pivoting portion (2044) is pivotally connected to the second pivoting portion (2046) by a first pivoting shaft (2047); the lateral support (204) being folded or unfolded by a relative movement of the first supporting component (2041) and the second supporting component (2042), wherein the folding mechanism (100) comprises:
a driven component (10);
a locking component (30) configured to engage with or disengage from the driven component (10); and
an operating component (20) linked to the driven component (10), the operating component (20) driving the driven component (10) to engage with the locking component (30) for restraining the relative movement of the first supporting component (2041) and the second supporting component (2042) or driving the driven component (10) to disengage from the locking component (30) for allowing the relative movement of the first supporting component (2041) and the second supporting component (2042),
wherein the driven component (10) and the operating component (20) are movably installed on a connection of the first supporting component (2041) and the second supporting component (2042), and the locking component (30) is fixed on the connection of the first supporting component (2041) and the second supporting component (2042).

2. The foldable child carrier (200) of claim 1, **characterized in that** the driven component (10) and the operating component (20) are movably installed on one of the first supporting component (2041) and the second supporting component (2042), the locking component (30) is fixed on another one of the first supporting component (2041) and the second supporting component (2042), an end of the driven component (10) is fixedly connected to the operating component (20), and another end of the driven component (10) is for detachably engaging with the locking component (30).

3. The foldable child carrier (200) of claim 1 or 2, **characterized in that** the operating component (20) and the driven component (10) move along a longitudinal direction of one of the first supporting component (2041) and the second supporting component (2042).

4. The foldable child carrier (200) of any of the preceding claims, **characterized in that**
the driven component (10) is a plate-shaped structure; and/or
the operating component (20) is a plug-shaped structure.

5. The foldable child carrier (200) of any of the preceding claims, **characterized in that** the driven component (10) comprises a fixing portion (11) and a restraining portion (12), the fixing portion (11) and the restraining portion (12) are arranged along a longitudinal direction of the driven component (10) and located at two opposite ends of the driven component (10), the fixing portion (11) is fixedly connected to the operating component (20), and the restraining portion (12) is for detachably engaging with the locking component (30).

6. The foldable child carrier (200) of claim 5, **characterized in that** the fixing portion (11) is at least one connecting hole on an upper end of the driven component (10), and the restraining portion (12) is at least one inserting block on a lower end of the driven component (10).

7. The foldable child carrier (200) of any of the preceding claims, **characterized in that** the operating component (20) comprises an inserting portion (21) and an operating portion (22), the inserting portion (21) and the operating portion (22) are arranged along a traverse direction of the operating component (20) and located at two opposite sides of the operating component (20), the inserting portion (21) passes through the driven component (10) and slidably engages with an inserting hole (204a) on the first supporting component (2041), and the operating portion (22) slidably abuts against an outer wall of the first supporting component (2041) and protrudes from the outer wall of the first supporting component (2041).

8. The foldable child carrier (200) of claim 7, **characterized in that** the operating portion (22) is a pushing block slidably disposed on the outer wall of the first supporting component (2041), and/or the inserting portion (21) is at least one inserting column protruding away from the pushing block from a side of the pushing block attached on the first supporting component (2041).

9. The foldable child carrier (200) of claim 8 or 9, **characterized in that** the inserting hole (204a) is a long hole penetrating through two opposite lateral walls of the first supporting component (2041).

10. The foldable child carrier (200) of claim 2, optionally in combination with any of claims 3 to 9, **characterized in that** the folding mechanism (100) further comprises a resilient component (40) connected to and located between the operating component (20) and the one of the first supporting component (2041) and the second supporting component (2042) and/or connected to and located between the driven component (10) and the one of the first supporting component (2041) and the second supporting component (2042) for driving the driven component (10) to move toward the locking component (30) to engage with the locking component (30).

11. The foldable child carrier (200) of any of the preceding claims, **characterized in that** the locking component (30) is a restraining slot and/or a restraining slot with an opening structure of the restraining slot comprising an arc-shaped guiding surface.

12. The foldable child carrier (200) of any of the preceding claims, **characterized in that** the first supporting component (2041) comprises an accommodating chamber (204b), the accommodating chamber (204b) is arranged along a longitudinal direction of the first supporting component (2041) and located between the first connecting portion (2043) and the first pivoting portion (2044), the driven component (10) is inserted into the accommodating chamber (204b) in a loose-fitting manner, and a portion of the operating component (20) extends along a traverse direction of the first supporting component (2041) from a side of the first supporting component (2041) and passes through the driven component (10) to slidably engage with an inserting hole (204a) on another side of the first supporting component (2041), wherein
the locking component (30) is disposed on a top end of the second supporting component (2042) and for detachably engaging with the driven component (10); and/or
the accommodating chamber (204b) is located between the first connecting portion (2043) and the first pivoting portion (2044).

13. The foldable child carrier (200) of any of the preceding claims, **characterized in that** the lateral support (204) further comprises a first connecting component (2048) and a second connecting component (2049), an end of the first connecting component (2048) is rotatably sleeved on the upper frame (202), another end of the first connecting component (2048) is fixedly connected to the first connecting portion (2043), an end of the second connecting component (2049) is fixedly connected to the lower plate (203), and another end of the second connecting component (2049) is pivotally connected to the second connecting portion (2045) by a second pivoting shaft (2050).

## Patentansprüche

1. Faltbarer Kinderträger (200), der eine seitliche Stütze (204), einen oberen Rahmen (202), eine untere Platte (203) und einen Faltmechanismus (100) umfasst, wobei die seitliche Stütze (204) mit der unteren Platte (203) und dem oberen Rahmen (202) verbunden ist und sich zwischen diesen befindet, wobei die seitliche Stütze (204) eine erste Stützkomponente (2041) und eine zweite Stützkomponente (2042), die beweglich mit der ersten Stützkomponente (2041) verbunden ist, umfasst, wobei die erste Stützkomponente (2041) einen ersten Verbindungsabschnitt (2043) und einen ersten Schwenkabschnitt (2044) umfasst, wobei der erste Verbindungsabschnitt (2043) drehbar mit dem oberen Rahmen (202) verbunden ist und die zweite Stützkomponente (2042) einen zweiten Verbindungsabschnitt (2045) und einen zweiten Schwenkabschnitt (2046) umfasst, wobei der zweite Verbindungsabschnitt (2045) drehbar mit der unteren Platte (203) verbunden ist und wobei der erste Schwenkabschnitt (2044) über einen ersten Schwenkschaft (2047) schwenkbar mit dem zweiten Schwenkabschnitt (2046) verbunden ist; wobei die seitliche Stütze (204) durch eine relative Bewegung der ersten Stützkomponente (2041) und der zweiten Stützkomponente (2042) gefaltet oder entfaltet wird, wobei der Faltmechanismus (100) Folgendes umfasst:
eine angetriebene Komponente (10);
eine Verriegelungskomponente (30), die eingerichtet ist, mit der angetriebenen Komponente (10) in Eingriff zu gelangen oder sich von dieser zu lösen; und
eine Betriebskomponente (20), die mit der angetriebenen Komponente (10) verbunden ist, wobei die Betriebskomponente (20) die angetriebene Komponente (10) antreibt, um mit der Verriegelungskomponente (30) in Eingriff zu gelangen, um die relative Bewegung der ersten Stützkomponente (2041) und der zweiten Stützkomponente (2042) einzuschränken, oder die angetriebene Komponente (10) antreibt, um sich von der Verriegelungskomponente (30) zu lösen, um die relative Bewegung der ersten Stützkomponente (2041) und der zweiten Stützkomponente (2042) zuzulassen,
wobei die angetriebene Komponente (10) und die Betriebskomponente (20) beweglich an einer Verbindung der ersten Stützkomponente (2041) und der zweiten Stützkomponente (2042) angebracht sind und die Verriegelungskomponente (30) an der Verbindung der ersten Stützkomponente (2041) und der zweiten Stützkomponente (2042) befestigt ist.

2. Faltbarer Kinderträger (200) nach Anspruch 1, **dadurch gekennzeichnet, dass** die angetriebene Komponente (10) und die Betriebskomponente (20) beweglich an einer der ersten Stützkomponente (2041) und der zweiten Stützkomponente (2042) angebracht sind, die Verriegelungskomponente (30) an einer anderen der ersten Stützkomponente (2041) und der zweiten Stützkomponente (2042) befestigt ist, ein Ende der angetriebenen Komponente (10) fest mit der Betriebskomponente (20) verbunden ist und ein anderes Ende der angetriebenen Komponente (10) zum lösbaren Eingriff mit der Verriegelungskomponente (30) dient.

3. Faltbarer Kinderträger (200) nach Anspruch 1 oder 2, **dadurch gekennzeichnet, dass** sich die Betriebskomponente (20) und die angetriebene Komponente (10) entlang einer longitudinalen Richtung einer der ersten Stützkomponente (2041) und der zweiten Stützkomponente (2042) bewegen.

4. Faltbarer Kinderträger (200) nach einem der vorhergehenden Ansprüche, **dadurch gekennzeichnet, dass**
die angetriebene Komponente (10) eine plattenförmige Struktur ist; und/oder
die Betriebskomponente (20) eine stopfenförmige Struktur ist.

5. Faltbarer Kinderträger (200) nach einem der vorhergehenden Ansprüche, **dadurch gekennzeichnet, dass** die angetriebene Komponente (10) einen Befestigungsabschnitt (11) und einen Einschränkungsabschnitt (12) umfasst, der Befestigungsabschnitt (11) und der Einschränkungsabschnitt (12) entlang einer longitudinalen Richtung der angetriebenen Komponente (10) angeordnet sind und sich an zwei gegenüberliegenden Enden der angetriebenen Komponente (10) befinden, der Befestigungsabschnitt (11) fest mit der Betriebskomponente (20) verbunden ist und der Einschränkungsabschnitt (12) zum lösbaren Eingriff mit der Verriegelungskomponente (30) dient.

6. Faltbarer Kinderträger (200) nach Anspruch 5, **dadurch gekennzeichnet, dass** der Befestigungsabschnitt (11) mindestens ein Verbindungsloch an einem oberen Ende der angetriebenen Komponente (10) ist und der Einschränkungsabschnitt (12) mindestens ein Einsetzblock an einem unteren Ende der angetriebenen Komponente (10) ist.

7. Faltbarer Kinderträger (200) nach einem der vorhergehenden Ansprüche, **dadurch gekennzeichnet, dass** die Betriebskomponente (20) einen Einsetzabschnitt (21) und einen Betriebsabschnitt (22) umfasst, der Einsetzabschnitt (21) und der Betriebsabschnitt (22) entlang einer Querrichtung der Betriebskomponente (20) angeordnet sind und sich an zwei gegenüberliegenden Seiten der Betriebskomponente (20) befinden, der Einsetzabschnitt (21) durch die angetriebene Komponente (10) hindurchgeht und verschiebbar mit einem Einsetzloch (204a) an der ersten Stützkomponente (2041) in Eingriff gelangt und der Betriebsabschnitt (22) verschiebbar an einer Außenwand der ersten Stützkomponente (2041) anliegt und von der Außenwand der ersten Stützkomponente (2041) vorsteht.

8. Faltbarer Kinderträger (200) nach Anspruch 7, **dadurch gekennzeichnet, dass** der Betriebsabschnitt (22) ein Schiebeblock ist, der verschiebbar an der Außenwand der ersten Stützkomponente (2041) angeordnet ist, und/oder der Einsetzabschnitt (21) mindestens eine Einsetzsäule ist, die von einer Seite des Schiebeblocks, die an der ersten Stützkomponente (2041) angebracht ist, von dem Schiebeblock weg vorsteht.

9. Faltbarer Kinderträger (200) nach Anspruch 8 oder 9, **dadurch gekennzeichnet, dass** das Einsetzloch (204a) ein Langloch ist, das durch zwei gegenüberliegende laterale Wände der ersten Stützkomponente (2041) hindurchgeht.

10. Faltbarer Kinderträger (200) nach Anspruch 2, optional in Kombination mit einem der Ansprüche 3 bis 9, **dadurch gekennzeichnet, dass** der Faltmechanismus (100) ferner eine elastische Komponente (40) umfasst, die mit der Betriebskomponente (20) und der einen von der ersten Stützkomponente (2041) und der zweiten Stützkomponente (2042) verbunden ist und sich zwischen diesen befindet und/oder mit der angetriebenen Komponente (10) und der einen von der ersten Stützkomponente (2041) und der zweiten Stützkomponente (2042) verbunden ist und sich zwischen diesen befindet, um die angetriebene Komponente (10) anzutreiben, um sich in Richtung der Verriegelungskomponente (30) zu bewegen, um mit der Verriegelungskomponente (30) in Eingriff zu gelangen.

11. Faltbarer Kinderträger (200) nach einem der vorhergehenden Ansprüche, **dadurch gekennzeichnet, dass** die Verriegelungskomponente (30) ein Einschränkungsschlitz und/oder ein Einschränkungsschlitz ist, wobei eine Öffnungsstruktur des Einschränkungsschlitzes eine bogenförmige Führungsfläche umfasst.

12. Faltbarer Kinderträger (200) nach einem der vorhergehenden Ansprüche, **dadurch gekennzeichnet, dass** die erste Stützkomponente (2041) eine Aufnahmekammer (204b) umfasst, die Aufnahmekammer (204b) entlang einer longitudinalen Richtung der ersten Stützkomponente (2041) angeordnet ist und sich zwischen dem ersten Verbindungsabschnitt (2043) und dem ersten Schwenkabschnitt (2044) befindet, die angetriebene Komponente (10) lose passend in die Aufnahmekammer (204b) eingesetzt ist und sich ein Abschnitt der Betriebskomponente (20) entlang einer Querrichtung der ersten Stützkomponente (2041) von einer Seite der ersten Stützkomponente (2041) erstreckt und durch die angetriebene Komponente (10) hindurchgeht, um verschiebbar mit einem Einsetzloch (204a) an einer anderen Seite der ersten Stützkomponente (2041) in Eingriff zu gelangen, wobei
die Verriegelungskomponente (30) an einem oberen Ende der zweiten Stützkomponente (2042) und zum lösbaren Eingriff mit der angetriebenen Komponente (10) angeordnet ist; und/oder
die Aufnahmekammer (204b) sich zwischen dem ersten Verbindungsabschnitt (2043) und dem ersten Schwenkabschnitt (2044) befindet.

13. Faltbarer Kinderträger (200) nach einem der vorhergehenden Ansprüche, **dadurch gekennzeichnet, dass** die seitliche Stütze (204) ferner eine erste Verbindungskomponente (2048) und eine zweite Verbindungskomponente (2049) umfasst, ein Ende der ersten Verbindungskomponente (2048) drehbar auf den oberen Rahmen (202) aufgeschoben ist, ein anderes Ende der ersten Verbindungskomponente (2048) fest mit dem ersten Verbindungsabschnitt (2043) verbunden ist, ein Ende der zweiten Verbindungskomponente (2049) fest mit der unteren Platte (203) verbunden ist und ein anderes Ende der zweiten Verbindungskomponente (2049) über einen zweiten Schwenschaft (2050) schwenkbar mit dem zweiten Verbindungsabschnitt (2045) verbunden ist.

## Revendications

1. Porte-enfant pliable (200) comprenant un support latéral (204), un cadre supérieur (202), un plateau inférieur (203) et un mécanisme de pliage (100), le support latéral (204) étant relié au plateau inférieur (203) et au cadre supérieur (202) et situé entre ceux-ci, le support latéral (204) comprenant un premier élément de soutien (2041) et un deuxième élément de soutien (2042) relié de manière mobile au premier élément de soutien (2041), le premier élément de soutien (2041) comprenant une première section de liaison (2043) et une première section pivotante (2044), la première section de liaison (2043) étant reliée par rotation au cadre supérieur (202) et le deuxième élément de soutien (2042) comprenant une deuxième section de liaison (2045) et une deuxième section pivotante (2046), la deuxième section de liaison (2045) étant reliée par rotation au plateau inférieur (203), et la première section pivotante (2044) étant reliée par pivot à la deuxième section pivotante (2046) par un premier arbre pivot (2047) ; le support latéral (204) étant plié ou déplié par un mouvement relatif du premier élément de soutien (2041) et du deuxième élément de soutien (2042), le mécanisme de pliage (100) comprenant :
un élément entraîné (10) ;
un élément de verrouillage (30) configuré pour venir en prise avec l'élément entraîné (10) ou se dégager de celui-ci ; et
un élément d'actionnement (20) relié à l'élément entraîné (10), l'élément d'actionnement (20) entraînant l'élément entraîné (10) à venir en prise avec l'élément de verrouillage (30) pour limiter le mouvement relatif du premier élément de soutien (2041) et du deuxième élément de soutien (2042) ou entraînant l'élément entraîné (10) à se dégager de l'élément de verrouillage (30) pour permettre le mouvement relatif du premier élément de soutien (2041) et du deuxième élément de soutien (2042),
dans lequel l'élément entraîné (10) et l'élément d'actionnement (20) sont placés de manière mobile au niveau d'une connexion entre le premier élément de soutien (2041) et le deuxième élément de soutien (2042), et l'élément de verrouillage (30) est attaché à la connexion entre le premier élément de soutien (2041) et le deuxième élément de soutien (2042).

2. Porte-enfant pliable (200) selon la revendication 1, **caractérisé en ce que** l'élément entraîné (10) et l'élément d'actionnement (20) sont placés de manière mobile dans un élément parmi le premier élément de soutien (2041) et le deuxième élément de soutien (2042), l'élément de verrouillage (30) est attaché à un autre élément parmi le premier élément de soutien (2041) et le deuxième élément de soutien (2042), une extrémité de l'élément entraîné (10) est reliée de manière fixe à l'élément d'actionnement (20), et une autre extrémité de l'élément entraîné (10) est destinée à venir en prise de manière amovible avec l'élément de verrouillage (30).

3. Porte-enfant pliable (200) selon la revendication 1 ou 2, **caractérisé en ce que** l'élément d'actionnement (20) et l'élément entraîné (10) se déplacent le long d'une direction longitudinale d'un élément parmi le premier élément de soutien (2041) et le deuxième élément de soutien (2042).

4. Porte-enfant pliable (200) selon l'une quelconque des revendications précédentes, **caractérisé en ce que**
l'élément entraîné (10) est une structure en forme de plaque ; et/ou
l'élément d'actionnement (20) est une structure en forme d'emprise.

5. Porte-enfant pliable (200) selon l'une quelconque des revendications précédentes, **caractérisé en ce que** l'élément entraîné (10) comprend une portion de fixation (11) et une portion de retenue (12), la portion de fixation (11) et la portion de retenue (12) sont agencées le long d'une direction longitudinale de l'élément entraîné (10) et situées à deux extrémités opposées de l'élément entraîné (10), la portion de fixation (11) est reliée de manière fixe à l'élément d'actionnement (20), et la portion de retenue (12) est destinée à venir en prise de manière amovible avec l'élément de verrouillage (30).

6. Porte-enfant pliable (200) selon la revendication 5, **caractérisé en ce que** la portion de fixation (11) est tout du moins un trou de liaison à une extrémité supérieure de l'élément entraîné (10), et la portion de retenue (12) est tout du moins un bloc d'insertion à une extrémité inférieure de l'élément entraîné (10).

7. Porte-enfant pliable (200) selon l'une quelconque des revendications précédentes, **caractérisé en ce que** l'élément d'actionnement (20) comprend une portion d'insertion (21) et une portion d'actionnement (22), la portion d'insertion (21) et la portion d'actionnement (22) sont agencées le long d'une direction transversale de l'élément d'actionnement (20) et situées à deux côtés opposés de l'élément d'actionnement (20), la portion d'insertion (21) passe à travers l'élément entraîné (10) et vient en prise de manière coulissante avec un trou d'insertion (204a) sur le premier élément de support (2041), et la portion d'actionnement (22) vient en butée de manière coulissante contre une paroi extérieure du premier élément de support (2041) et fait saillie depuis la paroi extérieure du premier élément de support (2041).

8. Porte-enfant pliable (200) selon la revendication 7, **caractérisé en ce que** la portion d'actionnement (22) est un bloc de poussée disposé de manière coulissante sur la paroi extérieure du premier élément de support (2041), et/ou la portion d'insertion (21) est tout du moins une colonne d'insertion faisant saillie depuis le bloc de poussée depuis un côté du bloc de poussée fixé sur le premier élément de support (2041).

9. Porte-enfant pliable (200) selon la revendication 8 ou 9, **caractérisé en ce que** le trou d'insertion (204a) est un trou long traversant deux parois latérales opposées du premier élément de support (2041).

10. Porte-enfant pliable (200) selon la revendication 2, éventuellement en combinaison avec l'une quelconque des revendications 3 à 9, **caractérisé en ce que** le mécanisme de pliage (100) comprend en outre un élément élastique (40) relié à et situé entre l'élément d'actionnement (20) et l'un du premier élément de support (2041) et du deuxième élément de support (2042) et/ou relié à et situé entre l'élément entraîné (10) et l'un du premier élément de support (2041) et du deuxième élément de support (2042) pour entraîner l'élément entraîné (10) à se déplacer vers l'élément de verrouillage (30) pour venir en prise avec l'élément de verrouillage (30).

11. Porte-enfant pliable (200) selon l'une quelconque des revendications précédentes, **caractérisé en ce que** l'élément de verrouillage (30) est une fente de retenue et/ou une fente de retenue avec une structure d'ouverture de la fente de retenue comprenant une surface de guidage en forme d'arc.

12. Porte-enfant pliable (200) selon l'une quelconque des revendications précédentes, **caractérisé en ce que** le premier élément de support (2041) comprend une cavité de logement (204b), la cavité de logement (204b) est agencée le long d'une direction longitudinale du premier élément de support (2041) et située entre la première portion de liaison (2043) et la première portion pivotante (2044), l'élément entraîné (10) est inséré dans la cavité de logement (204b) par ajustement lâche, et une portion de l'élément d'actionnement (20) s'étend le long d'une direction transversale du premier élément de support (2041) depuis un côté du premier élément de support (2041) et passe à travers l'élément entraîné (10) pour venir en prise de manière coulissante avec un trou d'insertion (204a) sur un autre côté du premier élément de support (2041), dans lequel
l'élément de verrouillage (30) est disposé à une extrémité supérieure du deuxième élément de support (2042) et destiné à venir en prise de manière amovible avec l'élément entraîné (10) ; et/ou
la cavité de logement (204b) est située entre la première portion de liaison (2043) et la première portion pivotante (2044).

13. Porte-enfant pliable (200) selon l'une quelconque des revendications précédentes, **caractérisé en ce que** le support latéral (204) comprend en outre un premier élément de liaison (2048) et un deuxième élément de liaison (2049), une extrémité du premier élément de liaison (2048) est emmanchée par rotation au cadre supérieur (202), une autre extrémité du premier élément de liaison (2048) est reliée de manière fixe à la première portion de liaison (2043), une extrémité du deuxième élément de liaison (2049) est reliée de manière fixe au plateau inférieure (203), et une autre extrémité du deuxième élément de liaison (2049) est reliée par pivot à la deuxième portion de liaison (2045) par un deuxième arbre pivot (2050).
